# EUROPEAN PATENT APPLICATION

(11) **EP 3 222 175 A1**
(43) Date of publication of application: **27.09.2017**
(21) Application number: 16162465.5
(22) Date of filing: 25.03.2016
(51) Int. Cl.: A47J 31/44

(54) **BEVERAGE DISPENSING MACHINE**

(71) Applicant: Whirlpool EMEA S.p.A., 20016 Pero (MI) (IT)
(72) Inventor: GALIENI, Massimo, 60044 Fabriano (Ancona) (IT); RIDERELLI BELLI, Marcello, 60044 Fabriano (Ancona) (IT)
(74) Representative: Monelli, Alberto

(57) **Abstract**

Beverage dispensing machine comprising:
- a spout (2) dispensing the beverage;
- a cup support (3), adjustable in height under the spout (2) in order to regulate the distance between the spout (2) and the support (3);
- guide means (4) of the cup support (3).

The support (3) slides along the guide means (4) at least between a first and a second position; in the first position the support (3) is suitable to support a cup of greater height with respect to a cup which can be supported in the second position.

## Description

The object of the present invention is a beverage dispensing machine and a method for dispensing beverages using the machine.

In particular the dispensing machine may dispense coffee and other beverages for example milk or fruit juices.

A machine dispensing coffee and other beverages is known.

In this case coffee is usually dispensed in a small cup which is placed under one spout of the machine, while milk or fruit juices are dispensed by the same spout in cups which are bigger than the coffee cups.

At this extent the cup for containing milk or fruit juices is placed on the tray under the spout, while the coffee cup is supported by a completely removable pedestal in turn supported by the tray. The pedestal is placed on the tray by the user before dispensing coffee. So the pedestal is interposed between the tray and the spout. The pedestal lays on the tray but is not connected with the tray.

One drawback of this solution is the fact that the pedestal can get lost.

Another drawback is the fact that the pedestal is not stably connected with the tray so it can tip over if bumped by the user.

Another known machine comprises a flap which may rotate around a horizontal axis; the flap may be locked in a first and a second configuration. In the first configuration the flap is horizontal and supports the coffee cup under the spout while in the second configuration develops vertically so greater cups may be placed under the spout.

One drawback of this solution is the complexity of the device, in particular the presence of the hinge and the system for locking the flap in the first and in the second configuration.

In this context, the technical task that is the basis of the present invention is to propose a device and a method that overcome the drawbacks of the cited prior art. In particular, one object of the present invention is improving the operation of the machine. Another object of the present invention is optimising the components of the machine, minimizing costs.

The technical task set and the objects specified are substantially attained by a device and a method comprising the technical characteristics as set out in one or more of the accompanying claims.

Further features and advantages of the present invention will become clearer from the indicative and thus non-limiting description of a preferred but non exclusive embodiment of a device, as illustrated in the attached drawings, in which:
- Figures 1 and 2 disclose a schematic view of a machine according to the present invention in two different configurations;
- Figure 3 discloses an alternative embodiment of a machine according to the present invention.

In the accompanying figures, reference number 1 indicates a beverage dispensing machine (preferably a household appliance).

The machine 1 comprises a spout 2 dispensing the beverage.

Advantageously the spout 2 dispenses a plurality of beverages (for example coffee, milk, fruit juices, etc.). In the preferred solution the machine 1 dispenses all the beverages through the same spout 2.

However the machine 1 could comprise a plurality of spouts 2.

The machine 1 comprises a cup support 3, adjustable in height under the spout 2 (or under one of the spouts if there are a plurality of spouts) in order to regulate the distance between the spout 2 and the support 3.

Advantageously the spout 2 cannot be raised or lowered. It is fixed in the machine 1.

The machine 1 comprises guide means 4 of the cup support 3.

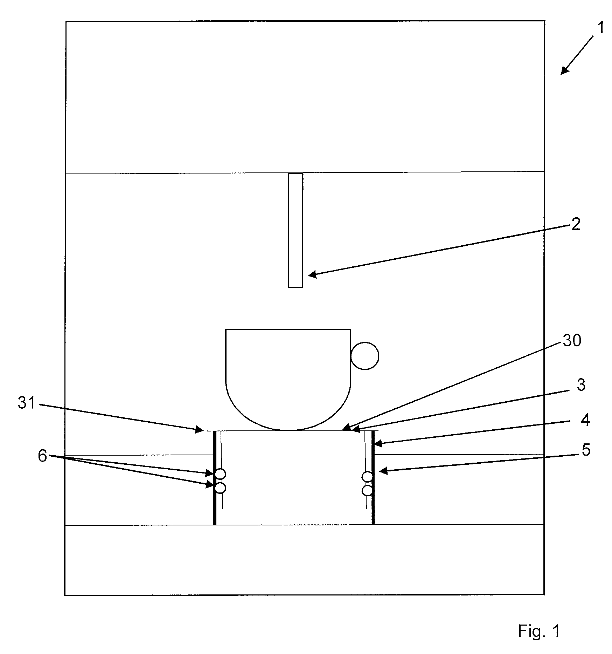

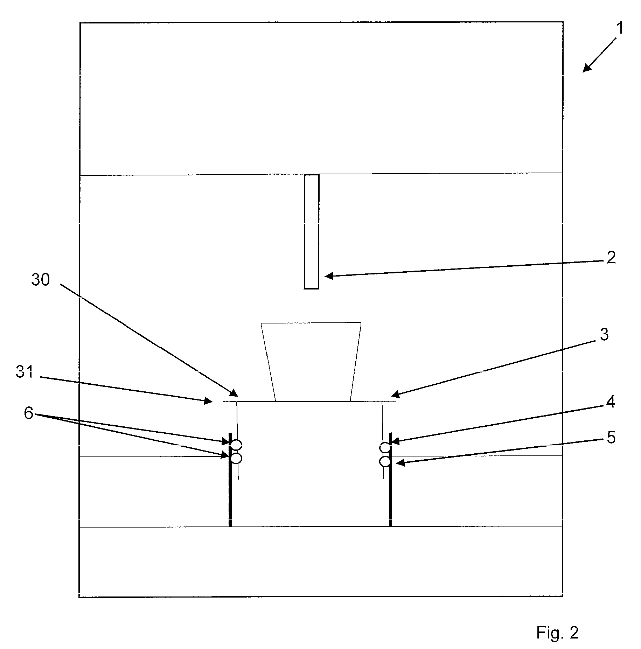

The support 3 slides along the guide means 4 at least between a first and a second position. In the first position (see figure 1) the support 3 is suitable to support a cup of greater height with respect to a cup which can be supported in the second position (see figure 2).

So espresso is dispensed with the support 3 in the second position while milk or fruit juices are dispensed with the support 3 in the first position.

In the first position the support 3 is lowered with respect to the second position.

The support 3 is movable from top to bottom (preferably along the same straight line) or vice versa.

The support 3 may translate (in particular vertically) along the guide means 4 between the first and the second position.

Alternatively the support 3 could have an helical motion. For example the guide means 4 could comprise a guide screw.

Preferably the support 3 is stably positionable in a plurality of positions between the first and the second position.

Advantageously the support 3 is stably positionable in any position interposed between the first and the second position.

The guide means 4 comprise a jacket 5 of the support 3. The support 3, both in the first and in the second position, protrudes in the jacket 5. The machine 1 comprises at least one gasket 6. The gasket 6 surrounds the annular portion of the support 3 that protrudes into the jacket 5. The gasket 6 is interposed between the support 3 and the jacket 5.

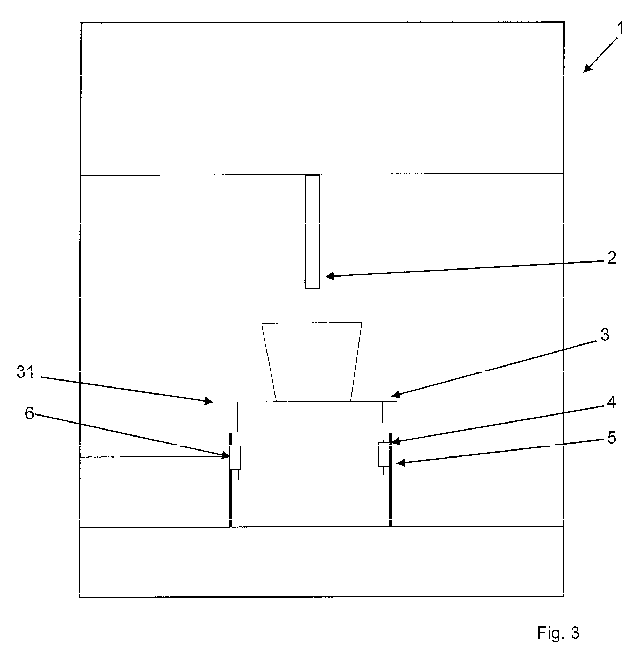

For example the at least one gasket 6 could comprise one or more O-rings. Otherwise the gasket 6 could comprise a strip, for example with a substantially rectangular cross section (see figure 3).

The gasket 6 is in contact with the support 3 and with the guide means 4 and holds by friction the support 3 in place. In this way the support 3 is stably positionable in a plurality of positions between the first and the second position.

The jacket 5 comprises two (preferably opposed) slots which are suitable for inserting two correspondent fingers and raising the support 3.

Preferably the two slots develop vertically.

The support 3 comprises an upper metallic element 30 co-molded with a plastic portion of the support 3.

The support 3 comprises a gripping zone 31 for raising the support 3 by hand. For lowering the support 3 it is pushed down by hand.

Advantageously the support 3 is removable from the guide means 4. In this way a complete cleaning of the support 3 is permitted. For removing the support 3 it is moved upward (beyond the second position).

Advangeously a bellow cover could connect the support 3 and the jacket 5.

An object of the present invention is also a method for dispensing beverages. One or more steps of this method are advantageously implemented by a machine 1 having one or more of the features disclosed above.

In particular the method comprises the steps of:
- positioning the support 3 in the second position (see figure 2) and dispensing espresso by the spout 2 in a coffee cup placed above the support 3;
- positioning the support 3 in the first position (see figure 1) and dispensing by the spout 2 milk or fruit juice in another cup placed above the support 3. The invention as it is conceived enables multiple advantages to be attained.

In particular it enables the regulation of the distance of the cup from the spout optimising at the same time the components of the machine and minimizing the risk that the support is lost by the user.

The invention as conceived is susceptible to numerous modification and variants, all falling within the scope of the inventive concept characterized thereby. Furthermore all the details can be replaced by other technically equivalent elements. In practice, all the materials used, as well as the dimensions, can be any according to requirements.

## Claims

1. Beverage dispensing machine comprising:
- a spout (2) dispensing the beverage;
- a cup support (3), adjustable in height under the spout (2) in order to regulate the distance between the spout (2) and the support (3);
- guide means (4) of the cup support (3);
**characterised in that** the support (3) slides along the guide means (4) at least between a first and a second position; in the first position the support (3) is suitable to support a cup of greater height with respect to a cup which can be supported in the second position.

2. Machine according to claim 1, wherein the support (3) may translate along the guide means (4) between the first and the second position.

3. Machine according to claim 1 or 2, wherein the support (3) may translates vertically along the guide means (4) between the first and the second position.

4. Machine according to claim 1, wherein the support (3) has an helical motion; the guide means (4) comprising a guide screw.

5. Machine according to any of the previous claims, wherein the support (3) is stably positionable in a plurality of positions between the first and the second position.

6. Machine according to any of the previous claims, wherein the guide means (4) comprise a jacket (5) of the support (3); the support (3) both in the first and in the second position protrudes in the jacket (5); the machine (1) comprising at least one gasket (6), the gasket (6) surrounding the annular portion of the support (3) that protrudes into the jacket (5) and being interposed between the support (3) and the jacket (5).

7. Machine according to claim 6, wherein the gasket (6) is in contact with the support (3) and the guide means (4) and holds by friction the support (3) in place.

8. Machine according to claim 6 or 7, wherein the at least one gasket (6) comprises one or more O-rings.

9. Machine according to claim 6 or 7 or 8, wherein the at least one gasket (6) comprises a strip having a substantially rectangular cross section.

10. Machine according to any of the claims from 6 to 9, wherein the jacket (5) comprises two opposed slots suitable for inserting two correspondent fingers and raising the support (3).

11. Machine according to any claims from 6 to 10, wherein a bellow cover connects the support (3) and the jacket.

12. Machine according to any of the previous claims, wherein the support (3) comprises an upper metallic element (30) co-molded with a plastic portion of the support (3).

13. Machine according to any of the previous claims, wherein the support (3) comprises a gripping zone (31) for raising the support (3) by hand.

14. Machine according to any of the previous claims, wherein the support (3) is removable from the guide means (4).

15. Method for dispensing beverages using the machine (1) according to any claims from 1 to 14, **characterised in that** it comprises the steps of:
- positioning the support (3) in the second position and dispensing espresso by the spout (2) in a coffee cup placed above the support (3);
- positioning the support (3) in the first position and dispensing by the spout (2) milk or fruit juice in another cup placed above the support (3).
